Europäisches Patentamt

European Patent Office

Office européen des brevets

(11) Veröffentlichungsnummer: **0 469 443 A2**

## EUROPÄISCHE PATENTANMELDUNG

(21) Anmeldenummer: **91112387.5**

(22) Anmeldetag: **24.07.91**

(51) Int. Cl.5: **B09B** 3/00, C02F 11/00

(30) Priorität: **30.07.90 DE 4024100**

(43) Veröffentlichungstag der Anmeldung:
**05.02.92 Patentblatt 92/06**

(84) Benannte Vertragsstaaten:
**FR GB NL**

(71) Anmelder: **HEINRICH DERNBACH GmbH,
ÖKOLOGISCH-LANDSCHAFTSBEZOGENE
SYSTEMBERATUNG
Meisselstrasse 29
W-4330 Mühlheim/Ruhr(DE)**

(72) Erfinder: **Tilgner, Hans Georg, Dr.
Lübecker Strasse 28
W-4330 Mülheim/Ruhr(DE)**

(54) Verfahren zur Behandlung von Abfallstoffen.

(57) Die Erfindung betrifft ein Verfahren zur Behandlung von Abfallstoffen wie Müll, Sondermüll, kontaminierten Böden, Klärschlamm, Deponieschlamm, Filterstäube, Flugasche und dergleichen, dadurch daß die gegebenenfalls zerkleinerten und/oder klassierten Abfallstoffe in einem geschlossenen Beh älter in siedendem Wasser mit Wasserdampf behandelt und der mit wasserdampfflüchtigen organischen Stoffen gesättigte Wasserdampf kondensiert wird. Vorzugsweise werden die Abfallstoffe kontinuierlich mittels Fördereinrichtungen durch das siedende Wasser geführt und dabei von toxischen und/oder unzersetzlichen und/oder biologisch nicht abbauenden und/oder Geruchsbelästigungen verursachenden organischen, mit Wasser nicht mischbaren Schadstoffen befreit.

EP 0 469 443 A2

Die Erfindung betrifft ein Verfahren zur Behandlung von Abfallstoffen wie Müll, Sondermüll, kontaminierten Böden, Klärschlamm, Deponieschlamm, Filterstäube, Flugasche und dergleichen.

Stand der Technik:

Belastungen der Umwelt durch Abfälle aller Art sollen nicht nur begrenzt werden, sondern ein erheblicher Teil des anfallenden Abfalls muß auch in Zukunft abgelagert werden. Dieses muß umweltfreundlich erfolgen, damit die Lebensräume der Natur vor schädlichen Umwelteinwirkungen geschützt werden Dazu ist es erforderlich, daß die Abfälle vor der Ablagerung von Schad- und Giftstoffen befreit werden.

Unter Abfallstoffen im Rahmen der Erfindung werden Stoffe verstanden, die in der vorliegenden Form einer Verwertung nicht zugänglich sind.

Unter Schad- und Giftstoffen werden toxische und/oder unzersetzliche und/oder biologisch nicht abbauende und/oder Geruchsbelästigungen verursachende organische
Stoffe verstanden. Im einzelnen sind dieses beispielsweise Kohlenwasserstoffe, halogenierte Kohlenwasserstoffe, Phenole, Dioxine, Furane, Lösungsmittel aller Art, organische Phosphor-, Schwefel-, Stickstoff-verbindungen und dergleichen.

Es sind bereits unterschiedliche Verfahren beschrieben worden, die einer Vorbehandlung zur Abtrennung der Schadstoffe dienen. So beschreibt die EP 185 831-A1 ein Verfahren, bei dem kontaminierte Böden mit Wasser extrahiert werden und bei dem die Schadstoffe aus dem Wasserextrakt mittels Fällmitteln, Adsorption, Säuren und Basen, Flockung, $p_H$-Einstellung oder Polyelektrolyten abgeschieden werden. Die gereinigten Böden werden entwässert und die anfallende kontaminierte Luft an Aktivkohlefiltern gereinigt.

Aus der DE 39 05 133-A1 ist ein Verfahren zur Entfernung leichtflüchtiger Bestandteile aus kontaminierten Böden bekannt. Dabei wird der Boden zerkleinert, aufgelockert und belüftet. Die mit der warmen Luft übergehenden leichtflüchtigen Bestandteile werden mittels einer mehrstufigen Anlage aus der Luft entfernt.

Aus dem US-Patent 43 36 136 ist ein System zur Behandlung von kontaminierten Böden bekannt, das eine Vorrichtung mit einen Mischer zum Mischen und Erhitzen der Böden mit einer Flüssigkeit umfaßt, um eine heiße Aufschlämmung zu erhalten. Die Aufschlämmung der Böden wird in mehreren Stufen, insbesondere durch Flotation von den Schadstoffen getrennt, und die Schadstoffe werden aus den verschie-denen Stufen zusammengeführt.

D. Hoogendoorn beschreibt (in Harzadous Mate-rials Control Research Institute, Silver Spring, Md/USA Management of Uncontrolled Harzadous Waste Sites, 1984, Seiten 569 - 575) Verfahren zum Entfernen von Schadstoffen aus Abfallstoffen durch Dampfbehandlung (steamstripping) bei Temperaturen zwischen 300°C - 700°C. Unter solchen Temperturbedingungen ist siedendes Wasser nicht existent.

Die DE 37 06 684-A1 beschreibt die Behandlung von kontaminierten Materialien durch direkte oder indirekte Beheizung in einem geeigneten Ofen mit Heißgasen oder Heißdampf und anschließender Kondensation. Bei dem thermischen Behandlungsprozess sollen vorzugsweise Temperaturen zwischen 200°C und 700°C angwendet werden.

Die DE 35 44 240-A1 beschreibt ein Verfahren zur Behandlung von Abfällen, die bei der Bearbeitung von Metallen anfallen, mit überhitztem Wasserdampf im Gegenstrom in einem Drehrohr, der sich die Kondensation des Gasgemisches, dessen Temperatur mindestens der Sattdampftemperatur des Gasgemisches entspricht, anschließt. Als Temperaturen für den überhitzten Wasserdampf sind 120 - 300°C, vorzugsweise 150 - 250°C vorgesehen. Gemäß dem Anspruch 7 der Schrift sollen feuchte Abfälle zunächst mit heißen Gasen (Abgase oder Abluft) getrocknet werden. Die Trocknung mit heißen Gasen soll den Vorteil haben, daß das verdampfte Wasser nicht in die Kondensation der Wasserdampfdestillation - wie sie im Rahmen dieser Schrift verstanden wird, nämlich ohne eine Phase aus siedendem Wasser - eingeführt wird. Die Trocknung soll ausdrücklich von der Behandlung separat vorgenommen werden. Auch die gemäß Anspruch 5 vorgesehene Maßnahme, den Innenmantel des Drehrohres indirekt zu beheizen, dient dazu, eine Kondensation bereits verdampften Wassers an der Innenwand des Drehrohres im Anfahrzustand zu vermeiden.

Im Entwurf zur "Technischen Anleitung - Abfall 1990" wird für die Entfernung von flüchtigen Kohlenwasserstoffen, halogenhaltigen Kohlenwasserstoffen, Schwefelwasserstoff und Ammmoniak aus Sickerwässern Strippung vorgeschlagen, wobei dieses Verfahren für Schlamm oder Feststoffe als ungeeignet und für die Reststoffe in der Gasphase eine thermische Behandlung als notwendig angesehen wird. Strippung ist die gasförmige Abtrennung von leicht-siedenden Stoffen aus einer Flüssigkeit mittels eines heißen Gases.

Erfindung:

Aufgabe der vorliegenden Erfindung war es, ein möglichst universell anwendbares Verfahren für die Behandlung von Schadstoffe enthaltenden Abfallstoffen zur Verfügung zu stellen, mit dem es gelingt, die organischen Schadstoffe praktisch vollständig aus dem vorliegenden Gemisch zu entfernen und dadurch einer getrennten und gezielten Aufarbeitung zugänglich zu machen.

Gelöst wird diese Aufgabe durch ein Verfahren, welches dadurch gekennzeichnet ist, daß die gegebenenfalls zer- kleinerten und/oder klassierten Abfallstoffe in einem geschlossenen Behälter in siedendem Wasser mit Wasser-dampf behandelt werden und der mit wasserdampfflüchtigen organischen Stoffen gesättigte Wasserdampf kondensiert wird.

Abfallstoffe fallen im wesentlichen als Gemisch von bzw. mit Feststoffen gegebenenfalls auch bereits als Schlamm an, in dem eine Vielzahl, im allgemeinen nicht bekannten oder auch wechselnden organischen Schadstoffen vorhanden ist Diese Schadstoffe dürfen nicht in Deponien abgela-gert werden, wenn dieses umweltfreundlich erfolgen soll, damit die Lebensräume der Natur vor schädlichen Umwelteinwirkungen geschützt werden.

Auch sollten diese organischen Schadstoffe aus den Abfallstoffen entfernt werden, bevor diese einer Verbrennung, beispielsweise in einer Müllverbrennungsanlage zugeführt werden.

Sind zwei Stoffe nicht miteinander mischbar, so verhalten sich beim Sieden des Gemisches die Massen der Bestandteile wie die Produkte aus den Dampfdrucken bei der Siedetemperatur des Gemisches und den Molekulargewichten.

Für Gemische aus zwei Bestandteilen besteht somit die Beziehung

$$\frac{m_1}{m_2} = \frac{p_1 \; M_1}{p_2 \; M_2}$$

Bei der seit langem bekannten Wasserdampfdestillation werden wasserunlösliche organische Stoffe in einfacher Weise aus beliebigen Gemischen isoliert. Dabei ist der mit dem Wasserdampf überdestillierende Anteil höhersiedender Stoffe aufgrund des niedrigen Molekular-gewichtes relativ hoch und entspricht etwa der doppelten Menge der mit Luft als Trägergas verdampfenden Stoffe. Ein anderer Vorteil der Anwendung der Wasserdampfdestillation ist die Tatsache, daß Wasser im Gegensatz zu Luft oder Stickstoff kondensiert und damit der im Restgas verbleibende Anteil an verdampften Stoffen nur sehr gering ist. Das Kondensat enthält beispielsweise bei der Wasserdampfdestillation von Terpentinöl, welches bei Normaldruck einen Siedepunkt von 160°C aufweist, etwa 50% Terpentinöl, das bereits bei einer Temperatur von 95°C übergeht. Da die für die Wasserdampfdestillation bestehende Voraussetzung, weitgehende Unmischbarkeit mit Wasser, dazu führt, daß das Kondensat sich in zwei Phasen trennt, ist die Aufarbeitung der nichtwäßrigen Phase mit üblichen Mitteln, beispielsweise mit Ölabscheidern, einfach zu bewerkstelligen. Eine Behandlung in siedendem Wasser umfaßt eine Wassermenge, die während der Behandlung die Abfallstoffe einschließt. Ein Wassergehalt, der im allgemeinen vorab durch Trocknen entfernt werden soll, kann eine Behandlung in siedendem Wasser nicht ersetzen.

Die wesentlichen Schadstoffe, die den Abfallstoffen vor ihrer Weiterverarbeitung, sei es die Ablagerung in einer Deponie oder sei es die Verbrennung oder sei es der biologische Abbau, entzogen werden sollten, sind mit Wasser nicht mischbar und wasserdampfflüchtig, so daß sie einer wirksamen Behandlung im erfindungsgemäßen Verfahren zugänglich sind.

Es ist empfehlenswert, aus den Abfallstoffen grobe An-teile wie Steine und Sperrgüter vorab abzutrennen und nach einer gegebenenfalls zweckmäßigen Zerkleinerung getrennt von den Schadstoffen zu befreien.

Beim erfindungsgemäßen Verfahren ist die Anwendung von Chemikalienzusätzen, wie Tenside, Fällmittel und dergleichen nicht erforderlich. Für eine wirtschaftliche Durchführung des Verfahrens ist die Ausnutzung von billiger Restenergie in Form von Wärme und insbesondere von Wasserdampf von erheblichem Vorteil. Deshalb läßt sich das erfindungsgemäße Verfahren besonders vorteilhaft in einer Nebenanlage eines Kraftwerkes, einer Müllverbrennungsanlage oder einer Industrieanlage mit Dampferzeugung durchführen.

Das erfindungsgemäße Verfahren läßt sich absatzweise durchführen, indem in einen Behälter die Abfallstoffe eingebracht und in Wasser aufgeschlämmt werden. Durch Dampfeinleitungsdüsen wird Wasserdampf zugeführt, der das Wasser zum Sieden bringt und die Schadstoffe entsprechend dem Dampfdruck verdampft. Die Dämpfe werden kondensiert und das mit Wasser nicht mischbare Kondensat, welches die wesentlichen Schadstoffe enthält, wird vom kondensierten Wasser getrennt. Der im Sumpf anfallende Schlamm wird in üblicherweiser vom Wasser getrennt, wobei das Wasser weitgehehend im Kreislauf geführt wird und nur teilweise einer üblichen Abwasserreinigung, die löslichen gegebenenfalls noch vorhandenen Schadstoffe in üblicher Weise entfernt, zugeführt. Soweit diese löslichen Schadstoffe flüchtig sind, findet man sie entsprechend ihrem Dampfdruckanteil angereichert auch im wäßrigen Anteil des Kondensates. Nach der Zusammensetzung dieser Schadstoffe richtet sich die weitere Behandlung des wäßrigen Anteils des Kondensates.

Das erfindungsgemäße Verfahren läßt sich auch kontinuierlich durchführen, indem die Abfallstoffe durch das siedende Wasser mittels einer umlaufenden Förderein-richtung transportiert werden. Vorzugsweise wird der Wasserdampf durch im Bereich der Fördereinrichtung angeordnete Einleitungsorgane zugeführt. In Ausgestaltung der Erfindung beträgt die Schütthöhe der Abfallstoffe in der Fördereinrichtung höchstens 0,5 m. Vorzugsweise beträgt die Schütthöhe der Abfallstoffe 0,1 bis 0,3 m. Durch diese Maßnahmen wird erreicht, daß die Durchdringung mit dem siedenden Wasser und dem Wasserdampf ausreicht, um die Schadstoffe schnell in die Dampfphase zu überführen.

Eine Ausführungsform einer kontinuierlichen Verfahrens-weise besteht darin, daß die Fördereinrichtung ein im Behälter umlaufendes Transportband ist. Eine weitere Ausführungsform einer kontinuierlichen Verfahrensweise besteht darin, daß die Fördereinrichtung ein im Behälter umlaufender Siebplattenförderer ist.

Innerhalb eines aus korrosionsfestem Stahlblech geschweißten Rahmens werden die Abfallstoffe auf ein perforiertes Plattenband aufgegeben, das durch das siedende Wasser mit einer vorbestimmten Geschwindigkeit transportiert wird. Das Siebplattenband ist aus einer Anzahl von Rahmenelementen aufgebaut, die auf Tragrollen ruhen. Auf den Rahmenelementen kann eine verstellbare Siebplatte angeordnet sein, bei der durch die Einstellung die Schütthöhe variiert werden kann. Zum Antrieb mittels zweier Sternräder dient vorzugsweise ein drehzahlveränderbares Antriebsorgan. Unter dem Siebplattenband sind vorzugsweise die Dampfdüsen zur Zuführung des Wasserdampfes angeordnet.

Eine bevorzugte Ausführungsform einer kontinuierlichen Verfahrensweise besteht darin, daß die Fördereinrichtung ein aus zwei wasserdurchlässigen Bändern gebildeter im Behälter umlaufender Schlauch ist, der auf seinem Weg durch das siedende Wasser geschlossen ist und durch entsprechende Leitorgane zum Füllen mit Abfallstoffen und zum Entleeren in einem begrenzten Bereich geöffnet wird. Die wasserdurchlässigen Bänder können beispielsweise aus relativ offenen Geweben aus hochfesten synthetischen Fasern oder entsprechenden Nonwovens oder korrosionsfesten Drahtgeweben bestehen. Die Ränder der Bänder sind mit kettenartig verbundenen und beweglichen Verschlußgliedern versehen. Durch Leitorgane können die Verschlußglieder verschlossen und geöffnet werden. In dem Bereich, in dem die Verschlußglieder beidseitig geschlossen sind, wird aus den zwei Bändern ein Schlauch gebildet, der an der Füllstelle und an der Entleerstelle einseitig geöffnet ist. Die Bänder können vor der Füllstelle von je einer Spule abgenommen werden und nach der Entleerstelle wieder auf je eine Spule aufgewickelt werden. Sie können aber auch als endlose Bänder umlaufen.

Eine weitere bevorzugte Ausführungsform einer kontinuierlichen Verfahrensweise besteht darin, daß die Fördereinrichtung aus wenigstens einer Förderschnecke in einem nach oben offenen Führungsrohr besteht. Dabei sollte das nach oben offene Führungsrohr mit einem Sieb abgedeckt werden, um einem Austreten von Schlamm vorzubeugen. Bei einem zu hohen Anteil an feinkörnigem Material sollte dieser bei Anwendung von Förderschnecken zweckmäßig vorher abgetrennt und einer getrennten Behandlung zugeführt werden.

In Ausgestaltung der Erfindung weist vorzugsweise wenigsten eine Förderschnecke eine durchlöcherte Hohlwelle auf, durch die der Wasserdampf zugeführt wird. Dadurch wird ein sehr rascher Stoff- und Wärmeübergang möglich, so daß die Schadstoffe schnell auch aus den inneren Schichten der Abfallstoffe in die Dampfphase überführt werden.

Um ein Austreten von schadstoffhaltigem Dampf in die Atmosphäre zu verhindern, wird die Fördereinrichtung vorzugsweise in je einer vom Behälter getrennten Schleuse gefüllt und entleert.

Vorzugsweise wird das Kondensat nach Abtrennung der wasserunlöslichen Bestandteile zumindest teilweise in das siedende, den Destillationssumpf bildende Wasser zurückgeführt. Damit wird gegebenenfalls auch die Konzentration an flüchtigen, in Wasser löslichen Schadstoffen bis zum Gleichgewichtszustand angehoben und die Schadstoffe lassen sich dann einfacher entsorgen.

Es hat sich auch als vorteilhaft erwiesen, das Verfahren so durchzuführen, daß ein Teil des Destillationssumpfes kontinuierlich entnommen und gegebenenfalls nach einem Strippen der leichtflüchtigen Bestandteile einer üblichen Abwasseraufarbeitung zugeführt wird.

Um die Wirksamkeit des erfindungsgemäßen Verfahrens zu erhöhen, hat es sich unter gewissen Voraussetzungen als zweckmäßig erwiesen, daß Gemische von Abfallstoffen unterschiedlicher Herkunft und Zusammensetzung behandelt werden. Das ist beispielsweise dann der Fall, wenn bei manchen Abfallstoffen nur wenige Schadstoffarten in jedoch größerer Konzentration vorliegen und bei anderen eine Vielzahl unterschiedlicher Schadstoffarten aber in relativ geringen Konzentrationen vorliegen.

**Patentansprüche**

1. Verfahren zur Behandlung von Schadstoffe enthaltenden Abfallstoffen wie Müll, Sondermüll, kontaminierten Böden, Klärschlamm, Deponieschlamm Filterstäube, Flugasche und dergleichen, dadurch gekennzeichnet, daß die gegebenenfalls zerkleinerten und/oder klassierten Abfallstoffe in einem geschlossenen Behälter in siedendem Wasser mit Wasserdampf behandelt und der mit wasserdampfflüchtigen organischen Stoffen gesättigte Wasserdampf kondensiert wird.

2. Verfahren nach Anspruch 1, dadurch gekennzeichnet, daß die Abfallstoffe durch das siedende Wasser mittels einer umlaufenden Fördereinrichtung transportiert werden und daß der Wasserdampf durch im Bereich der Fördereinrichtung angeordnete Einleitungsorgane zugeführt wird.

3. Verfahren nach den Ansprüchen 1 oder 2, dadurch gekennzeichnet, daß die Schütthöhe der Abfallstoffe in der Fördereinrichtung höchstens 0,5 m, vorzugsweise 0,1 bis 0,3 m beträgt.

4. Verfahren nach einem oder mehreren der Ansprüche 2 bis 3, dadurch gekennzeichnet, daß die Fördereinrichtung ein im Behälter umlaufendes Transportband und/oder umlaufender Siebplattenförderer ist.

5. Verfahren nach einem oder mehreren der Ansprüche 2 bis 3, dadurch gekennzeichnet, daß die Fördereinrichtung ein aus zwei wasserdurchlässigen Bändern gebildeter im Behälter umlaufender Schlauch ist, der auf seinem Weg durch das siedende Wasser geschlossen ist und durch entsprechende Leitorgane zum Füllen mit Abfallstoffen und zum Entleeren in einem begrenzten Bereich geöffnet wird.

6. Verfahren nach einem oder mehreren der Ansprüche 2 bis 3, dadurch gekennzeichnet, daß die Fördereinrichtung aus wenigstens einer Förderschnecke in einem nach oben offenen Führungsrohrbesteht, wobei vorzugsweise wenigstens eine Förderschnecke eine durchlöcherte Hohlwelle aufweist, durch die der Wasserdampf zugeführt wird..

7. Verfahren nach einem oder mehreren der Ansprüche 4 bis 6, dadurch gekennzeichnet, daß die Fördereinrichtung in je einer vom Behälter getrennten Schleuse gefüllt und entleert wird.

8. Verfahren nach einem oder mehreren der Ansprüche 1 bis 7, dadurch gekennzeichnet, daß das Kondensat nach Abtrennung der wasserunlöslichen Bestandteile zumindest teilweise in das siedende, den Destillationssumpf bildende Wasser zurückgeführt wird.

9. Verfahren nach einem oder mehreren der Ansprüche 1 bis 8, dadurch gekennzeichnet, daß ein Teil des Destillationssumpfes kontinuierlich entnommen wird, gegebenenfalls nach einem Strippen der leichtflüchtigen Bestandteile, einer üblichen Abwasseraufarbeitung zugeführt wird.

10. Verfahren nach einem oder mehreren der Ansprüche 1 bis 9, dadurch gekennzeichnet, daß Gemische von Abfallstoffen unterschiedlicher Herkunft und Zusammensetzung behandelt werden.